# EUROPEAN PATENT SPECIFICATION

(11) **EP 4 492 002 B1**
(45) Date of publication and mention of the grant of the patent: **05.08.2026**
(21) Application number: 23788103.2
(22) Date of filing: 13.03.2023
(51) Int. Cl.: B65G 43/02, G01B 11/06, G01B 11/25

(54) **SURFACE SHAPE MEASUREMENT METHOD, SURFACE SHAPE MEASUREMENT DEVICE, AND BELT MANAGEMENT METHOD**
OBERFLÄCHENFORMMESSVERFAHREN, OBERFLÄCHENFORMMESSVORRICHTUNG UND BANDVERWALTUNGSVERFAHREN
PROCÉDÉ DE MESURE DE FORME DE SURFACE, DISPOSITIF DE MESURE DE FORME DE SURFACE ET PROCÉDÉ DE GESTION DE COURROIE

(30) Priority: 11.04.2022 JP 2022065349
(43) Date of publication of application: 15.01.2025
(73) Proprietor: JFE Steel Corporation, Tokyo 100-0011 (JP)
(72) Inventor: NISHINA, Yoshiaki, Tokyo 100-0011 (JP); YAMAHIRA, Naoshi, Tokyo 100-0011 (JP); ENOEDA, Seiji, Tokyo 100-0011 (JP)
(74) Representative: Hoffmann Eitle
(86) International application number: PCT/JP2023/009734
(87) International publication number: WO 2023/199681

(56) References cited:
- WO-A1-2018/076053
- WO-A1-2019/188718
- JP-A- 2006 132 942
- JP-A- 2006 132 942
- JP-A- 2020 076 767

## Description

### TECHNICAL FIELD

The present disclosure relates to a surface shape measurement method, a surface shape measurement device, and a belt management method. The present disclosure relates in particular to a surface shape measurement device, a surface shape measurement method, and a belt management method that measure a surface shape of a belt wrapped around a pulley.

### BACKGROUND

For example, belt conveyors with a conveyor belt wrapped around a pair of pulleys that serves as a driving means are known as transport devices for transporting transported materials, such as raw materials. In the belt conveyors, the thickness of conveyor belts needs to be managed so as to prevent fractures of the conveyor belts.

Here, for example, Patent Literatures 1 and 2 describe a device and a system by which unevenness of a surface of a conveyor belt is measured by the light-sectioning method using a line laser.

### CITATION LIST

### Patent Literatures

PTL 1: JP 2020-076767 A
PTL 2: JP 2017-032346 A

### SUMMARY

### (Technical Problem)

Here, according to the techniques of PTL 1 and PTL 2, when the thickness of a conveyor belt is measured, a measurement position in a circumferential direction of the conveyor belt is identified, by determining a joint portion of the belt with a reflective displacement meter or by detecting the moving amount of the belt with a moving amount sensor. It is therefore necessary to install a sensor, such as a reflective displacement meter or a moving amount sensor, in addition to a line laser, which requires installation cost and effort. For example, it is difficult to measure the thicknesses of a large number of conveyor belts by the techniques of PTL 1 and PTL 2.

It would be helpful to provide a surface shape measurement device, a surface shape measurement method, and a belt management method by which a measurement position in a circumferential direction of a belt is estimated without separately installing a sensor and the thickness of the belt is measured with high accuracy.

### (Solution to Problem)

(1) A surface shape measurement device according to an embodiment of the present disclosure is
   a surface shape measurement device that measures a surface shape of a belt wrapped around a pulley and driven to rotate around, the surface shape measurement device including:
   a belt surface measurement unit configured to measure the surface shape of the belt and a surface shape of the pulley; and
   a control unit configured to compute the surface shape of the belt, based on measurement data for the surface shape of the belt and the surface shape of the pulley that have been measured, wherein
   the control unit estimates a measurement position in a circumferential direction of the belt from the measurement data for the surface shape of the pulley, and computes the surface shape of the belt by associating the measurement data for the surface shape of the belt with the measurement position.
(2) As an embodiment of the present disclosure, in (1),
   the pulley has an uneven portion formed thereon, and
   the control unit estimates the measurement position using the uneven portion.
(3) As an embodiment of the present disclosure, in (2),
   the uneven portion comprises a projection protruding toward an outer side in a width direction of the pulley.
(4) As an embodiment of the present disclosure, in (3),
   the projection is formed at a position that is as high as a surface of the pulley or higher than the surface of the pulley.
(5) A surface shape measurement method according to an embodiment of the present disclosure is
   a surface shape measurement method of measuring a surface shape of a belt wrapped around a pulley and driven to rotate around, the surface shape measurement method including:
   measuring the surface shape of the belt and a surface shape of the pulley; and
   computing the surface shape of the belt, based on measurement data for the surface shape of the belt and the surface shape of the pulley that have been measured, wherein
   computing the surface shape of the belt includes estimating a measurement position in a circumferential direction of the belt from the measurement data for the surface shape of the pulley, and computing the surface shape of the belt by associating the measurement data for the surface shape of the belt with the measurement position.
(6) A belt management method according to an embodiment of the present disclosure includes
   managing a belt, based on a surface shape of the belt that has been computed by the surface shape measurement method according to (5).

### (Advantageous Effect)

The present disclosure can provide the surface shape measurement device, the surface shape measurement method, and the belt management method by which the measurement position in the circumferential direction of the belt is estimated without separately installing a sensor and the thickness of the belt is measured with high accuracy.

### BRIEF DESCRIPTION OF THE DRAWINGS

In the accompanying drawings:
FIG. 1 illustrates an example configuration of a surface shape measurement device according to an embodiment;
FIG. 2 illustrates how a surface shape (surface position) of a conveyor belt is measured by a belt surface measurement unit;
FIG. 3A illustrates effects caused by inclination and eccentricity of a pulley on surface shape data for the conveyor belt, and FIG. 3B illustrates effects caused by inclination and eccentricity of the pulley on the surface shape data for the conveyor belt;
FIG. 4 is a flowchart illustrating an example of a surface shape measurement method according to an embodiment;
FIG. 5A illustrates a method of correcting the effects of inclination of the pulley, and FIG. 5B illustrates a method of correcting the effects of inclination of the pulley;
FIG. 6A illustrates a method of correcting the effects of eccentricity of the pulley, and FIG. 6B illustrates a method of correcting the effects of eccentricity of the pulley;
FIG. 7A illustrates detection of rotations of the conveyor belt, and FIG. 7B illustrates detection of rotations of the conveyor belt; and
FIG. 8 illustrates a joint portion of the conveyor belt.

### DETAILED DESCRIPTION

Hereinafter, a surface shape measurement device, a surface shape measurement method, and a belt management method according to an embodiment of the present disclosure will be described with reference to the drawings. In the figures, the same or corresponding portions are denoted with the same reference signs. In the description of the present embodiment, description of the same or corresponding portions will be omitted or simplified as appropriate.

### <Surface Shape Measurement Device>

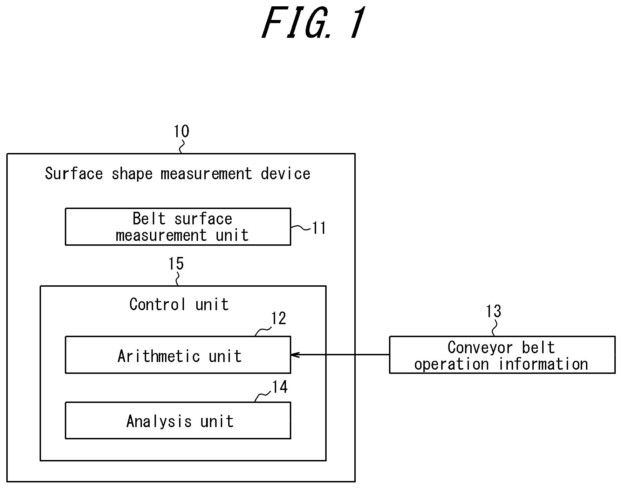

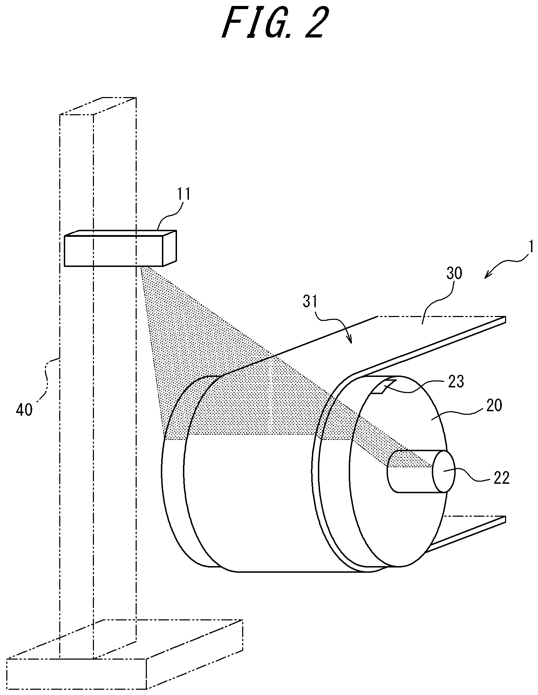

FIG. 1 illustrates an example configuration of a surface shape measurement device 10 according to the present embodiment. FIG. 2 illustrates how a surface shape of a conveyor belt 30 of a belt conveyor 1 is measured by a belt surface measurement unit 11 of the surface shape measurement device 10. The surface shape measurement device 10 measures the surface shape of the conveyor belt 30 wrapped around a pulley 20, as illustrated in FIG. 2. Here, the pulley 20 is an example of a drive means. The conveyor belt 30 is an example of a belt. The surface shape measurement device 10 is a device that measures the surface shape of the belt driven in a direction of travel by the drive means. Although the belt is not limited to the conveyor belt 30, it is described as the conveyor belt 30 driven by the pulley 20 in the present embodiment. Here, the direction of travel is a direction in which the belt moves by driving force from the drive means. In the present embodiment, the direction of travel is also referred to as a direction of transport or a circumferential direction. The direction of transport is a direction in which transported items placed on a surface 31 of the conveyor belt 30 in operation move. The conveyor belt 30 wrapped around a pair of pulleys 20 is driven to rotate around, and the circumferential direction means a direction in which the conveyor belt 30 moves when rotating.

In the belt conveyor 1, the thickness of conveyor belt 30 needs to be managed so as to prevent fractures of the conveyor belt 30. The thickness of the conveyor belt 30 can be computed from the surface shape measured by the surface shape measurement device 10 and managed. When the surface shape can be measured with high accuracy, the thickness of the conveyor belt 30 can be accurately obtained by computation. Here, the surface shape is a shape of the surface 31 of the conveyor belt 30 including its unevenness. For example, a portion on the surface 31 of the conveyor belt 30 that is depressed compared to its surroundings can indicate that this portion of the conveyor belt 30 is thinner than the surroundings.

As illustrated in FIG. 1, the surface shape measurement device 10 according to the present embodiment includes the belt surface measurement unit 11 and a control unit 15. The control unit 15 includes an arithmetic unit 12 and an analysis unit 14. The surface shape measurement device 10 is a device that measures the surface shape of the conveyor belt 30, by the belt surface measurement unit 11, the arithmetic unit 12, and the analysis unit 14 operating in cooperation. The arithmetic unit 12 acquires conveyor belt operation information 13 as needed. The conveyor belt operation information 13 is information regarding the operation and the state of the conveyor belt 30 that is obtained, for example, from a control unit of the belt conveyor 1. The belt surface measurement unit 11 and the control unit 15 may be connected by a network, such as a Local Area Network (LAN), so as to transmit and receive information (measurement data) obtained from measurement. The control unit of the belt conveyor 1 may be connected by the same network, such as a LAN. Details of the components of the surface shape measurement device 10 will be described later.

As illustrated in FIG. 2, the conveyor belt 30, which is an object to be measured by the surface shape measurement device 10, is wrapped around the pulley 20. When the pulley 20 rotates, the conveyor belt 30 moves and can transport transported items placed on the surface 31 of the conveyor belt 30. Here, the surface 31 of the conveyor belt 30 is a surface (outer surface) of the conveyor belt 30 that is opposite to a surface (inner surface) located closer to the pulley 20.

Here, in the present embodiment, the pulley 20 has a projection 23 formed thereon. The projection 23 protrudes toward an outer side in a width direction from at least one end in the width direction of the pulley 20. Here, it is sufficient for the pulley 20 to be formed with an uneven portion with unevenness that serves as a marker distinguishable from other portions of the pulley 20. The uneven portion is not limited to any shape. The projection 23 is an example of the uneven portion.

### <Belt Surface Measurement Unit>

As illustrated in FIG. 2, the belt surface measurement unit 11 measures the surface shape of the pulley 20, in addition to the surface shape of the conveyor belt 30. The belt surface measurement unit 11 can identify the surface positions of the conveyor belt 30 and the pulley 20 by the measurement. That is, it can be said that local information on the surface shapes corresponds to the surface positions. For this reason, measurement by the belt surface measurement unit 11 may also be referred to below as "measuring a surface position." The belt surface measurement unit 11 can simultaneously measure the surface position of the conveyor belt 30 and the surface position of the pulley 20 in a portion in which the conveyor belt 30 contacts the pulley 20. In the present embodiment, the belt surface measurement unit 11 is a non-contact measurement device that measures the surface positions of the conveyor belt 30 and the pulley 20 while being out of contact with the conveyor belt 30 or the pulley 20. The belt surface measurement unit 11 performs measurement when the pulley 20 and the conveyor belt 30 are rotating. Preferably, the belt surface measurement unit 11 measures the surface position of the conveyor belt 30 at least over the entire length in the direction of transport.

In the present embodiment, the belt surface measurement unit 11 is a unit, such as a light-sectioning profilometer, that uses the laser light-sectioning method. The belt surface measurement unit 11 can measure the surface position of the conveyor belt 30 over the entire length in a width direction, by emitting a line laser beam onto the conveyor belt 30 and the pulley 20. The belt surface measurement unit 11 is capable of measuring, for the pulley 20, surface positions of both ends in the width direction of the pulley 20 that are exposed from ends in the width direction of the conveyor belt 30.

The belt surface measurement unit 11 is disposed at a position from which it can emit a laser beam onto the conveyor belt 30 from diagonally above the pulley 20, so that the surface positions of the conveyor belt 30 and the pulley 20 can simultaneously be measured in a portion in which the conveyor belt 30 contacts the pulley 20. The belt surface measurement unit 11 may be configured to be held in the vicinity of the pulley 20 by a holding member 40 installed on the ground. At this time, in order to accurately measure a thickness direction of the conveyor belt 30, the belt surface measurement unit 11 is installed so that a direction in which the laser beam is emitted passes through a center 22 of the pulley 20. The belt surface measurement unit 11 measures the surface position of the conveyor belt 30 in the portion in which it contacts the pulley 20, so that the conveyor belt 30 does not swing up and down and can be measured in a stable posture. Furthermore, the surface position of the conveyor belt 30 and the surface position of the pulley 20 can be measured simultaneously at the same position. Accordingly, the number of measurement units can be reduced, and the surface position of the conveyor belt 30 can be corrected with high accuracy in accordance with the surface position of the pulley 20, compared to a configuration in which the surface positions of the conveyor belt 30 and the pulley 20 are measured separately by two measurement units.

Thus, the belt surface measurement unit 11 can make measurements and obtain information on the surface position of the conveyor belt 30 and information on the surface position of the pulley 20. The belt surface measurement unit 11 can also obtain information on the surface shape of the pulley 20 including information on the shape of the projection 23 provided at the end of the pulley 20. It is noted, however, that the obtained information on the surface position of the conveyor belt 30 is information including the eccentricity and the inclination of the pulley 20.

Here, in another configuration example, a unit that does not use the laser light-sectioning method can be employed as the belt surface measurement unit 11. However, the belt surface measurement unit 11 is preferably a non-contact measurement unit that can make a measurement while being out of contact with the conveyor belt 30 or the pulley 20, so that it can measure the surface positions of the conveyor belt 30 and the pulley 20 when they are rotating.

### <Control Unit>

The control unit 15 includes the arithmetic unit 12 and the analysis unit 14. The control unit 15 corrects the surface position of the conveyor belt 30 based on the surface position of the pulley 20 that has been measured by the belt surface measurement unit 11, and computes the surface shape of the conveyor belt 30. The control unit 15 may be configured to include a processor that executes computation, and a memory that stores data (such as information on the surface position) to be used in the computation. The processor is, for example, a general-purpose processor or a dedicated processor that is dedicated to specific processing, but is not limited to these and can be any processor. The memory includes one or more memories. The memory can be, for example, a semiconductor memory, a magnetic memory, an optical memory, or the like, but is not limited to these and can be any memory. The control unit 15 may be, for example, a computer.

### <Arithmetic Unit>

The arithmetic unit 12 computes the surface shape of the conveyor belt 30 over the entire length in the direction of transport, based on measurement data, which is information on the surface position from the belt surface measurement unit 11, and conveyor belt operation information 13, which is acquired as needed. Here, the entire length in the direction of transport of the conveyor belt 30 may also be referred to as the entire circumference or the entire length in the circumferential direction. Additionally, computing the surface shape may include determining the thickness of the conveyor belt 30, or it may include determining the unevenness of the surface 31 of the conveyor belt 30 by, for example, associating it with a two-dimensional map.

### <Analysis Unit>

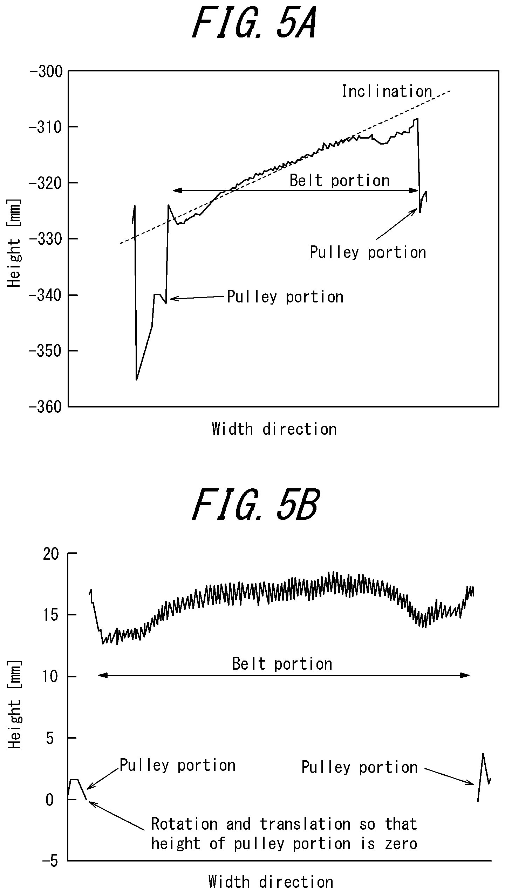

The analysis unit 14 is a unit for identifying (estimating) a measurement position in the circumferential direction of the conveyor belt 30 and detecting rotations of the conveyor belt 30 using information on the surface shape of the pulley 20 and the surface shape of the conveyor belt 30. Details of the detection of rotations will be described later. The analysis unit 14 also removes information on the surface position (eccentricity and inclination) of the pulley 20 from information on the surface shape of the conveyor belt 30 that has been computed by the arithmetic unit 12, so as to obtain an accurate surface shape of the conveyor belt 30. Here, the surface position of the pulley 20 to be removed is the surface position of the pulley 20 over the entire width (entire length in the width direction). The analysis unit 14 estimates the surface position of the pulley 20 over the entire length in the width direction from the surface positions of both ends in the width direction of the pulley 20 that have been measured by the belt surface measurement unit 11. As illustrated, for example, by the dashed line in FIG. 5A, the analysis unit 14 estimates a straight-line portion obtained when the positions of the both ends in the width direction of the pulley 20 are connected by a straight line as the surface position of the pulley 20.

### <Surface Shape Measurement Method>

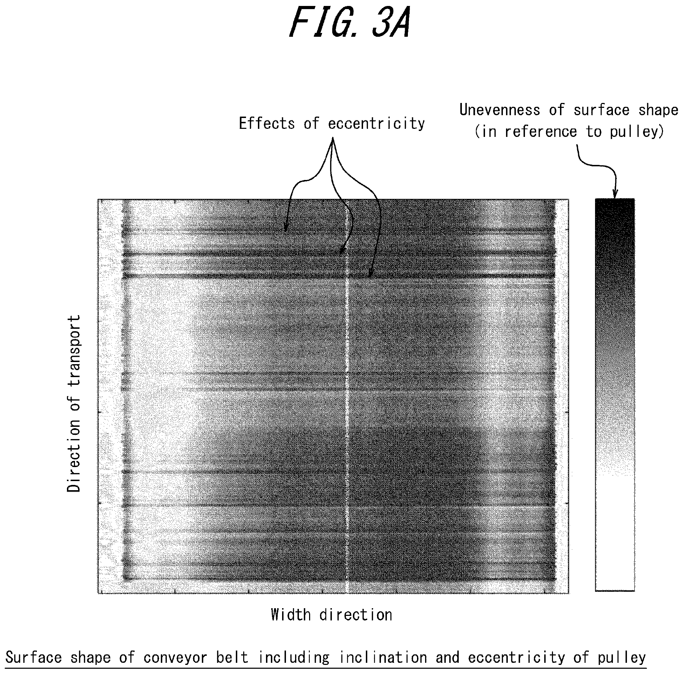

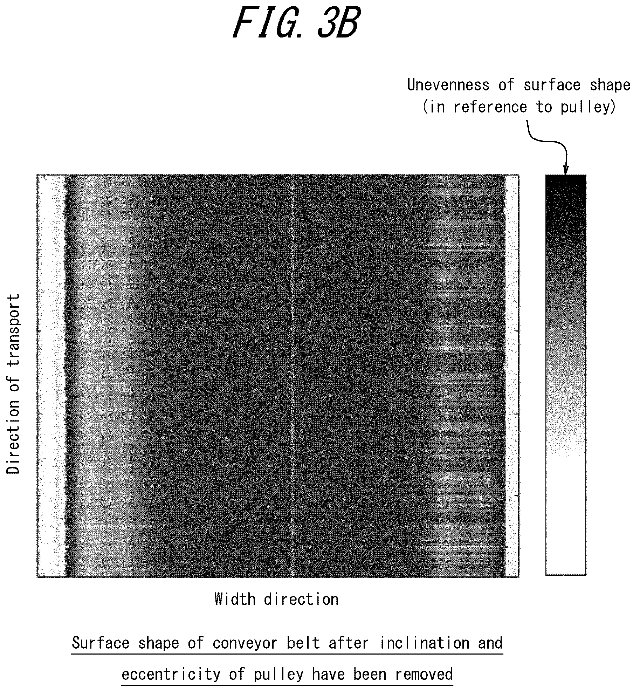

FIG. 3A and FIG. 3B each illustrate, for measurement data obtained by the belt surface measurement unit 11, surface shapes of the conveyor belt 30 and the pulley 20 in gray scales. In the present embodiment, a surface position is obtained as a position in a height direction (hereinafter referred to as a "height"), where a radial direction from the center 22 of the cylindrical pulley 20 is defined as the height direction. The surface position of the conveyor belt 30 may be described as high when far from the center 22 in the radial direction of the pulley 20 and low when close to the center 22. In FIG. 3A and FIG. 3B, black portions, such as those in the vicinity of the center in the width direction, indicate surface positions higher than white portions. FIG. 3A illustrates data including effects of inclination and eccentricity of the pulley 20. For example, due to the effects of eccentricity, black linear portions can be seen along the entire width direction. In addition, a color distribution that is not symmetrical with respect to the width direction can be seen. FIG. 3B illustrates data from which the effects of inclination and eccentricity of the pulley 20 have been removed. In FIG. 3B, black linear portions or an asymmetric color distribution are not seen. The data for the surface shapes of the conveyor belt 30 and the pulley 20 as illustrated in FIG. 3B can be obtained, by executing correction processing that will be described below.

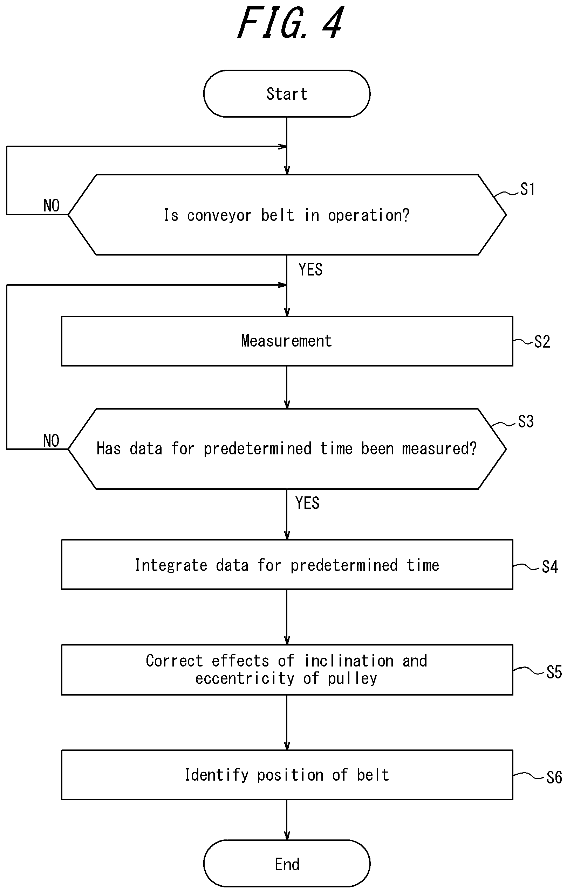

FIG. 4 is a flowchart illustrating an example of the surface shape measurement method to be executed by the surface shape measurement device 10 according to the present embodiment.

When determining that the conveyor belt 30 is not in operation based on a signal obtained from conveyor belt operation information 13, the surface shape measurement device 10 waits (No in Step S1). When the conveyor belt 30 is in operation (Yes in Step S1), the surface shape measurement device 10 performs measurement with the belt surface measurement unit 11 (Step S2).

The surface shape measurement device 10 measures data for a predetermined time, while the conveyor belt 30 is in operation. The predetermined time may be any time corresponding to a plurality of rotations of the conveyor belt 30, and it is not limited to a specific value. The predetermined time is, for example, twice the time it takes for the conveyor belt 30 to rotate one round (time required for two rotations).

When data for the predetermined time has not been measured (No in Step S3), the surface shape measurement device 10 continues measuring. When data for the predetermined time has been measured (Yes in Step S3), the surface shape measurement device 10 integrates the data for the predetermined time (Step S4).

Here, the surface shape data obtained in Step S3 includes effects of the surface position (inclination and eccentricity) of the pulley 20. Accordingly, the surface shape measurement device 10 analyzes accurate surface shape data for the conveyor belt 30 (Step S5). The surface shape measurement device 10 corrects the surface position of the conveyor belt 30 based on the surface position (inclination and eccentricity) of the pulley 20, and calculates the surface shape of the conveyor belt 30 from which the effects of inclination and eccentricity of the pulley 20 have been removed.

FIG. 5A and 5B each illustrate a method of correcting the effects of inclination of the pulley 20. Here, the pulley 20 and the conveyor belt 30 wrapped around the pulley 20 can be distinguished in the width direction, because a sharp height difference (level difference) occurs at both ends (boundary) of the conveyor belt 30. Pulley portions in FIG. 5A and FIG. 5B are portions in which the pulley 20 is determined to be exposed. Belt portions in FIG. 5A and FIG. 5B are portions in which the conveyor belt 30 is determined to be present. FIG. 5A illustrates an example of the surface position (surface shape) of the conveyor belt 30 before inclination calculated by the control unit 15 is corrected. From the difference in the surface position (height) between the both ends of the pulley 20, it can be seen that the entire pulley is inclined in the width direction. It can also be seen that the surface position (surface shape) of the conveyor belt 30 is also inclined due to the effects of inclination of the pulley 20. The control unit 15 corrects the effects of inclination of the pulley 20, by rotating and translating the surface positions of the conveyor belt 30 and the pulley 20 so that the height of the pulley 20 is zero (at a reference point), as illustrated in FIG. 5B. Here, the inclination of the pulley 20 can be measured (estimated) even while the pulley 20 (conveyor belt 30) is stopped.

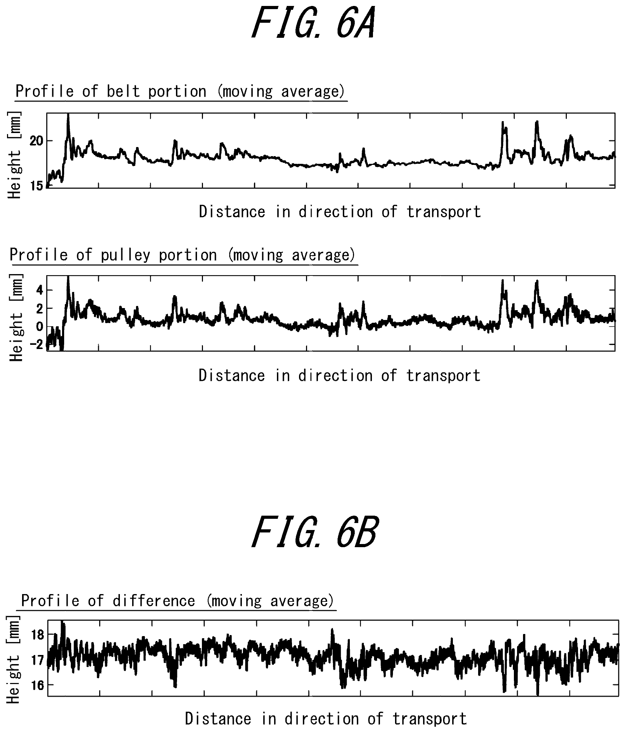

FIG. 6A and FIG. 6B illustrate a correction method in a case in which the pulley 20 has eccentricity (the center 22 is offset). Due to the eccentricity of the pulley 20, the surface shape of conveyor belt 30 becomes uneven in the direction or transport (circumferential direction). FIG. 6A illustrates the surface shape at a central position in the width direction of the conveyor belt 30 and the surface shape at both end positions in the width direction of the pulley 20 before eccentricity calculated by the control unit 15 is corrected. The moving average of the surface shape (profile of the belt portion) at the center in the width direction of the conveyor belt 30 and the moving average of the surface shape at the both end positions in the width direction (profile of the pulley portion) of the pulley 20 coincide with each other. This indicates that the surface shape of the belt portion is affected by the eccentricity of the pulley 20. The control unit 15 corrects the effects of eccentricity of the pulley 20, by subtracting the profile of the pulley portion from the profile of the belt portion and taking the difference, as illustrated in FIG. 6B. In the example of FIG. 6B, the range of fluctuation in the surface shape of the conveyor belt 30 is approximately 2 mm. Compared to a range of fluctuation of approximately 8 mm in the surface shape of the conveyor belt 30 before the eccentricity is corrected (FIG. 6A), the range of fluctuation is much smaller, thus indicating that the surface shape of the conveyor belt 30 can be measured with high accuracy by the correction. The control unit 15 can then accurately measure the thickness of the conveyor belt 30, based on the surface shape of the conveyor belt 30 obtained with high accuracy by the correction.

Here, distances in the direction of transport on the horizontal axis in each of FIG. 6A and FIG. 6B are positions in the direction of transport at which the surface shape (height) of the conveyor belt 30 is measured, arranged in order of measurement times. Accordingly, a break in rotations (for example, a starting point of the entire length in the direction of transport of the second rotation) is unknown. With reference to FIG. 4 again, the surface shape measurement device 10 identifies the position of the conveyor belt 30, based on measurement data after the inclination and the eccentricity of the pulley 20 have been corrected as above (Step S6). Here, the distance in the direction of transport is obtained, for example, by measurement frequency [sec/times] × number of measurements [times] × speed of conveyor belt 30 [mm/sec].

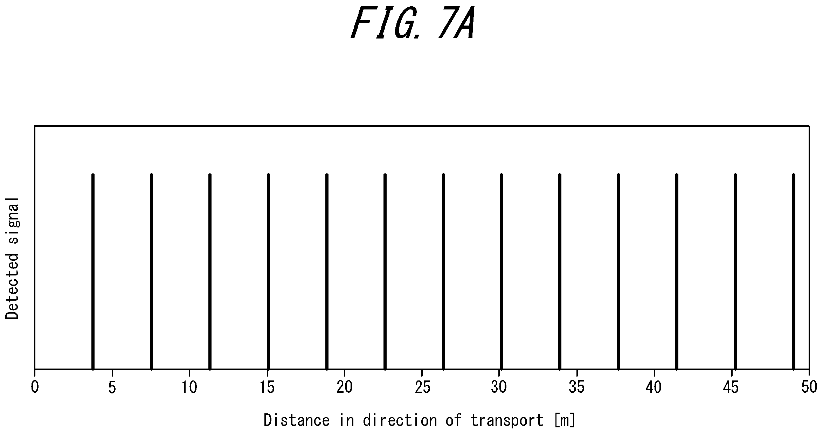

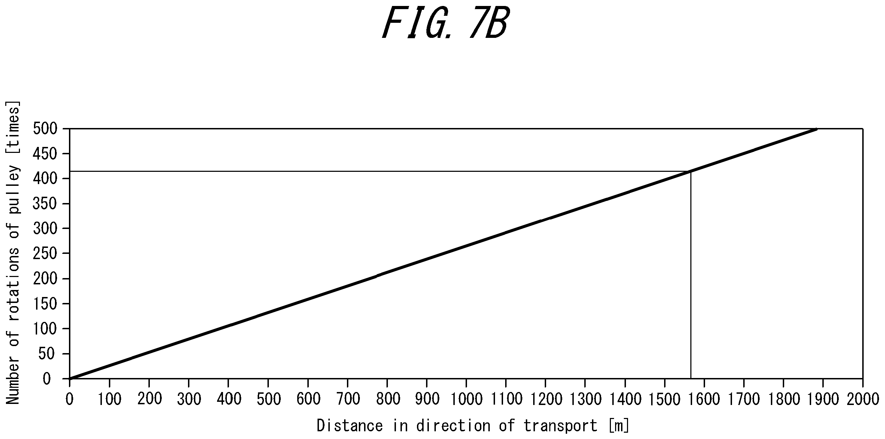

FIG. 7A and FIG. 7B illustrate detection of rotations of the conveyor belt 30. In the present embodiment, the control unit 15 can use time-series data including information on the shape of the projection 23 provided at one end in the width direction of the pulley 20 to identify a position. As illustrated in FIG. 7A, in a case in which the surface shape of the pulley 20 is measured by the belt surface measurement unit 11, a signal indicating a convex portion (in this example, the projection 23) is detected at regular intervals (once every 3768 [mm] [3.768 [m]]) on the outer side in the width direction of the pulley 20. The signal indicating the convex portion is a signal indicating the surface of the pulley 20 that is detected on the outer side in the width direction than normal.

In FIG. 7B, the horizontal axis indicates distance in the direction of transport and the vertical axis indicates number of rotations of the pulley 20. Because the conveyor belt speed of the conveyor belt 30 and the diameter of the pulley 20 are known, a measurement position of the conveyor belt 30 and the distance in the direction of transport can be identified by detecting the projection 23 and counting the number of rotations of the pulley 20. Based on the above information and the length of the conveyor belt 30 that is known, the control unit 15 can identify and extract measurement data for one rotation of the conveyor belt 30.

In the example of FIG. 7B, the diameter of the pulley 20 is 1200 [mm], and the entire length in the direction of transport of the conveyor belt 30 is 1568000 [mm] (1568 [m]). Accordingly, the circumferential length of one rotation of the pulley 20 is approximately 3768 [mm], and the number of pulley rotations necessary for one rotation to be detected is 416.

Here, for example, in a wide conveyor belt 30 or the like with a width of 1200 [mm] or more, it is preferable to provide the projection 23 at both ends in the width direction of the pulley 20 because the surface shape of the conveyor belt 30 may be measured by two line lasers. The size of the projection 23 may be determined from the relationship between the measurement frequency of laser light and the speed of the conveyor belt 30. In the example of FIG. 7B, the speed is 200 [mm/sec], and the measurement frequency is 1000 times/sec. Accordingly, the projection 23 with a circumferential length (length in the circumferential direction of the pulley 20) of 20 [mm] is provided at one location in the circumferential direction of the pulley 20, so that detection can be made 100 times. Moreover, in a case in which the projection 23 is provided below the surface of the pulley 20, a line laser may not be able to be emitted onto the projection 23 behind the pulley 20. It is therefore preferable for the projection 23 to be formed at a position that is as high as the surface of the pulley 20 or higher than the surface of the pulley 20. Additionally, the protrusion length (length in the width direction) of the projection 23 from the pulley 20 is set to 50 [mm] or more, which is approximately 200 times of 0.5 [mm], the measurement resolution in the width direction of the line laser.

The aforementioned size, location, and number in the circumferential direction of projections 23 are examples, and the present disclosure is not limited to those illustrated in the examples as long as they can be detected by a line laser. In the present embodiment, the uneven portion is formed so that it serves as the projection 23 protruding in the width direction of the pulley 20, it may be configured to protrude in the height direction from an end of the pulley 20. The uneven portion may also be formed as a recessed portion (groove) rather than a projection at an end in the width direction of the pulley 20, so as to be detected by the line laser.

The control unit 15 may thus detect rotations and determine a measurement position on the conveyor belt 30, using a position indicating a characteristic pattern on the conveyor belt 30 as a reference position (position at which the distance in the direction of transport is zero).

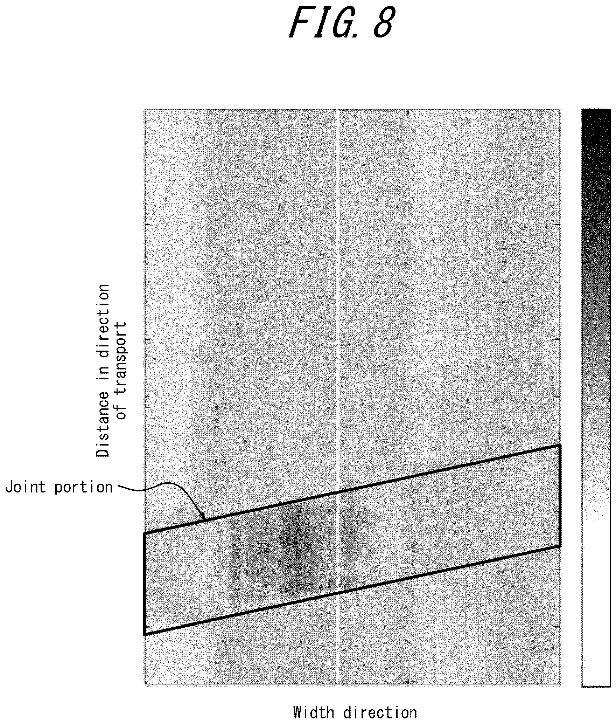

FIG. 8 illustrates a joint portion of the conveyor belt 30. The joint portion of the conveyor belt 30 is a portion that is thicker than other portions. Accordingly, the joint portion of the conveyor belt 30 exhibits a characteristic pattern in measurement data. Here, as illustrated in FIG. 8, the joint portion is characterized by being at an angle with respect to the belt width direction. Therefore, in a case in which measurement data is obtained for the width direction, it is possible to detect that the characteristic pattern occurs at an angle and to accurately detect the joint portion.

The control unit 15 can calculate the measurement position in the circumferential direction of the conveyor belt 30 using, for example, the joint portion of the conveyor belt 30 as the reference position, according to the aforementioned relationship of rotations based on the number of pulley rotations.

### <Belt Management Method>

Using the surface shape measurement method described above, the conveyor belt 30 can be managed (monitored), based on the computed surface shape of the conveyor belt 30. The surface shape measurement device 10 determines, for example, whether the thickness of the conveyor belt 30 is sufficient, based on the computed surface shape of the conveyor belt 30. When determining that the thickness is not sufficient, the surface shape measurement device 10 can inform an operator of a fault in the conveyor belt 30 or stop the conveyor belt 30. By thus managing the conveyor belt 30 based on the computed surface shape of the conveyor belt 30, it is possible to detect a fault in the conveyor belt 30 with high accuracy and to promptly address the fault.

As described above, with the above configuration and processes, the surface shape measurement device 10 and the surface shape measurement method according to the present embodiment can measure the thickness of the conveyor belt 30 with high accuracy, by identifying the uneven portion formed in the pulley 20 from measurement data and estimating a measurement position in the circumferential direction of the belt without separately installing a sensor. Moreover, the belt management method according to the present embodiment makes it possible to accurately determine the thickness of the conveyor belt 30, so that the conveyor belt 30 can be managed so as to prevent fractures or the like.

Although an embodiment of the present disclosure has been described based on the drawings and examples, it is to be noted that various modifications and changes may be easily made by those skilled in the art based on the present disclosure. Accordingly, such modifications and changes are included within the scope of the present disclosure. For example, functions or the like included in each component, each step (process), or the like can be rearranged without logical inconsistency, and a plurality of components, steps, or the like can be combined into one or divided. An embodiment according to the present disclosure can be implemented as a program that is performed by a processor included in a device, or as a storage medium in which the program is recorded. It is to be understood that these are included within the scope of present disclosure.

Although in the above embodiment an object to be measured is the conveyor belt 30, it is not limited to the conveyor belt 30. The belt, which is an object to be measured, at least needs to be a belt wrapped around the pulley 20.

Although in the above embodiment the joint portion of the conveyor belt 30 is identified (estimated) and the joint portion is used as the reference position, the reference position is not limited to the joint portion. For example, a flaw (recessed portion) or the like that is present on the surface 31 of the conveyor belt 30 may be used as the reference position.

In the above embodiment, detection of rotations (estimation of a measurement position) is performed using measurement data after the correction of removing effects of inclination and eccentricity of the pulley 20. However, it is not essential to remove the effects of inclination and eccentricity of the pulley 20, and rotations may be detected based on waveforms in measurement data before the correction.

### REFERENCE SIGNS LIST

- 1: Belt conveyor
- 10: Surface shape measurement device
- 11: Belt surface measurement unit
- 12: Arithmetic unit
- 13: Conveyor belt operation information
- 14: Analysis unit
- 15: Control unit
- 20: Pulley
- 22: Center
- 23: Projection
- 30: Conveyor belt
- 31: Surface of conveyor belt
- 40: Holding member

## Claims

1. A surface shape measurement device that measures a surface shape of a belt wrapped around a pulley and driven to rotate around, the surface shape measurement device comprising:
a belt surface measurement unit configured to measure the surface shape of the belt and a surface shape of the pulley; and
a control unit configured to compute the surface shape of the belt, based on measurement data for the surface shape of the belt and the surface shape of the pulley that have been measured, **characterised in that**
the control unit estimates a measurement position in a circumferential direction of the belt from the measurement data for the surface shape of the pulley, and computes the surface shape of the belt by associating the measurement data for the surface shape of the belt with the measurement position.

2. The surface shape measurement device according to claim 1, wherein
the pulley has an uneven portion formed thereon, and
the control unit estimates the measurement position using the uneven portion.

3. The surface shape measurement device according to claim 2, wherein the uneven portion comprises a projection protruding toward an outer side in a width direction of the pulley.

4. The surface shape measurement device according to claim 3, wherein the projection is formed at a position that is as high as a surface of the pulley or higher than the surface of the pulley.

5. A surface shape measurement method of measuring a surface shape of a belt wrapped around a pulley and driven to rotate around, the surface shape measurement method comprising:
measuring the surface shape of the belt and a surface shape of the pulley; and
computing the surface shape of the belt, based on measurement data for the surface shape of the belt and the surface shape of the pulley that have been measured, **characterised in that**
computing the surface shape of the belt includes estimating a measurement position in a circumferential direction of the belt from the measurement data for the surface shape of the pulley, and computing the surface shape of the belt by associating the measurement data for the surface shape of the belt with the measurement position.

6. A belt management method comprising managing a belt, based on a surface shape of the belt that has been computed by the surface shape measurement method according to claim 5.

## Patentansprüche

1. Oberflächenformmessvorrichtung, die eine Oberflächenform eines um eine Riemenscheibe gewickelten und zum Umlaufen angetriebenen Riemens misst, die Oberflächenformmessvorrichtung umfassend:
eine Riemenoberflächenmesseinheit, die ausgebildet ist, die Oberflächenform des Riemens und eine Oberflächenform der Riemenscheibe zu messen; und
eine Steuereinheit, die ausgebildet ist, die Oberflächenform des andesB, basierend auf Messdaten für die Oberflächenform des Riemens und die Oberflächenform der Riemenscheibe, die gemessen worden sind, zu berechnen, **dadurch gekennzeichnet, dass**
die Steuereinheit eine Messposition in einer Umfangsrichtung des Riemens aus den Messdaten für die Oberflächenform der Riemenscheibe schätzt und die Oberflächenform des Riemens berechnet, indem sie die Messdaten für die Oberflächenform des Riemens mit der Messposition verknüpft.

2. Oberflächenformmessvorrichtung nach Anspruch 1, wobei
die Riemenscheibe einen darauf gebildeten unebenen Bereich aufweist, und
die Steuereinheit die Messposition unter Verwendung des unebenen Bereichs schätzt.

3. Oberflächenformmessvorrichtung nach Anspruch 2, wobei der unebene Bereich einen Vorsprung umfasst, der zu einer Außenseite in einer Breitenrichtung der Riemenscheibe vorsteht.

4. Oberflächenformmessvorrichtung nach Anspruch 3, wobei der Vorsprung an einer Position gebildet ist, die so hoch wie eine Oberfläche der Riemenscheibe oder höher als die Oberfläche der Riemenscheibe ist.

5. Oberflächenformmessverfahren zum Messen einer Oberflächenform eines um eine Riemenscheibe gewickelten und zum Umlaufen angetriebenen Riemens, das Oberflächenformmessverfahren umfassend:
das Messen der Oberflächenform des Riemens und einer Oberflächenform der Riemenscheibe; und
das Berechnen der Oberflächenform des Riemens, basierend auf Messdaten für die Oberflächenform des Riemens und die Oberflächenform der Riemenscheibe, die gemessen worden sind, **dadurch gekennzeichnet, dass**
das Berechnen der Oberflächenform des Riemens, das Schätzen einer Messposition in einer Umfangsrichtung des Riemens aus den Messdaten für die Oberflächenform der Riemenscheibe und das Berechnen der Oberflächenform des Riemens durch Verknüpfen der Messdaten für die Oberflächenform des Riemens mit der Messposition einschließt.

6. Riemverwaltungsverfahren, umfassend
Verwalten eines Riemens, basierend auf einer Oberflächenform des Riemens, die durch das Oberflächenformmessverfahren nach Anspruch 5 berechnet worden ist.

## Revendications

1. Dispositif de mesure de forme de surface qui mesure une forme de surface d'une courroie enroulée autour d'une poulie et entraînée à tourner, le dispositif de mesure de forme de surface comprenant :
une unité de mesure de surface de courroie configurée pour mesurer la forme de surface de la courroie et une forme de surface de la poulie ; et
une unité de commande configurée pour calculer la forme de surface de la courroie, sur la base de données de mesure pour la forme de surface de la courroie et la forme de surface de la poulie qui ont été mesurées, **caractérisé en ce que**
l'unité de commande estime une position de mesure dans une direction circonférentielle de la courroie à partir des données de mesure pour la forme de surface de la poulie, et calcule la forme de surface de la courroie en associant les données de mesure pour la forme de surface de la courroie à la position de mesure.

2. Dispositif de mesure de forme de surface selon la revendication 1, dans lequel
la poulie présente une partie irrégulière formée sur elle, et
l'unité de commande estime la position de mesure en utilisant la partie irrégulière.

3. Dispositif de mesure de forme de surface selon la revendication 2, dans lequel la partie irrégulière comprend une saillie faisant saillie vers un côté extérieur dans une direction de largeur de la poulie.

4. Dispositif de mesure de forme de surface selon la revendication 3, dans lequel la saillie est formée à une position qui est à une hauteur égale à celle d'une surface de la poulie ou à une hauteur supérieure à celle de la surface de la poulie.

5. Procédé de mesure de forme de surface pour mesurer une forme de surface d'une courroie enroulée autour d'une poulie et entraînée à tourner, le procédé de mesure de forme de surface comprenant :
le fait de mesurer la forme de surface de la courroie et une forme de surface de la poulie ; et
le fait de calculer la forme de surface de la courroie, sur la base de données de mesure pour
la forme de surface de la courroie et la forme de surface de la poulie qui ont été mesurées, **caractérisé en ce que**
le calcul de la forme de surface de la courroie inclut le fait d'estimer une position de mesure dans une direction circonférentielle de la courroie à partir des données de mesure pour la forme de surface de la poulie, et le fait de calculer la forme de surface de la courroie en associant les données de mesure pour la forme de surface de la courroie à la position de mesure.

6. Procédé de gestion de courroie comprenant
le fait de gérer une courroie sur la base d'une forme de surface de la courroie qui a été calculée par le procédé de mesure de forme de surface selon la revendication 5.
